# EUROPÄISCHE PATENTSCHRIFT

(11) **EP 1 851 148 B1**
(45) Veröffentlichungstag und Bekanntmachung des Hinweises auf die Patenterteilung: **26.11.2008**
(21) Anmeldenummer: 06706636.5
(22) Anmeldetag: 04.02.2006
(51) Int. Cl.: B65G 47/84, B65B 59/04, F16M 1/04, B67C 3/02

(54) **VORTISCHSYSTEM**
PRE-TABLE SYSTEM
SYSTÈME DE TABLE AVANT

(30) Priorität: 16.02.2005 DE 202005002469 U
(43) Veröffentlichungstag der Anmeldung: 07.11.2007
(73) Patentinhaber: KRONES Aktiengesellschaft, 93073 Neutraubling (DE)
(72) Erfinder: ZEPF, Georg, 93095 Hagelstadt (DE)
(74) Vertreter: Grünecker, Kinkeldey, Stockmair & Schwanhäusser Anwaltssozietät
(86) Internationale Anmeldenummer: PCT/EP2006/000974
(87) Internationale Veröffentlichungsnummer: WO 2006/087109

(56) Entgegenhaltungen:
- EP-A- 1 074 471
- EP-A- 1 316 520
- US-A1- 2003 075 547

## Beschreibung

Die Erfindung betrifft ein Vortischsystem gemäß dem Oberbegriff des Patentanspruchs 1.

Üblicher Standard von Vortischsystemen für Behälter-Behandlungsmaschinen, wie Flaschenfüllern, ist ein Plattenkörper, in dem zumindest die Zu- und Abführsterne, gegebenenfalls auch Transfersterne und gegebenenfalls weitere Behälter-Behandlungs-Baueinheiten an fest vorgegebenen Positionen montiert sind. Solche konventionelle körperliche Vortisch-Plattenkörper sind schwierig zu reinigen und in mikrobiologischer Hinsicht kritisch. Ferner ist die jeweilige Sterne-Konfiguration festgeschrieben und nicht variabel.

Aus EP 1 316 520 A ist ein Vortischsystem bekannt, das auf einem nach einem Kreisbogenabschnitt geformten, mit Standfüßen auf dem Boden stehenden Kanalträger aufbaut, der nicht nur die Tragstruktur für die Sterne bildet, sondern auch fest integrierte Lagerstellen für weitere Behälter-Behandlungs-Baueinheiten aufweist. Für die Sterne sind an den an festgelegten Positionen im Kanalträger sitzförmige Traggehäuse eingeschweißt. An den Enden des Kanalträgers sind weitere Befestigungsmöglichkeiten vorgesehen. Der Kanalträger ist nach unten zumindest bereichsweise offen und deshalb hinsichtlich der Reinigung und der mikrobiologischen Verhältnisse günstiger als das bekannte Vortischsystem mit einem Plattenkörper. Der Kanalträger passt zu unterschiedlichen Behälter-Behandlungsmaschinen.

Die Anzahl und die Typen der Sterne und der Behälter- Behandlungs-Baueinheiten können von Fall zu Fall verschieden sein.

In der EP-A-1 64 5 53 7 mit älterem Zeitrang wird ein Vortisch für Behälter-Behandlungsmaschinen vorgeschlagen, bei dem Abschnitte eines Rahmens für mehrere Sterne mit auf dem Boden stehenden Fundamentringen der Behälter-Behandlungsmaschinen verbunden sind. Diese Abschnitte erstrecken sich jeweils von einem Fundamentrohr zum nächsten. Von einigen dieser die Behälter-Behandlungsmaschinen fundamentseitig verbindendenden Abschnitten stehen weitere Abschnitte ab, die an ihren freien Enden jeweils eine Aufnahme für ein Gehäuse eines Zuführ- oder Abführsterns bilden, oder tragen. Der die Sterne tragende Rahmen hängt ohne BodenKontakt an den Fundamentrohren.

Der Erfindung liegt die Aufgabe zugrunde, ein Vortischsystem anzugeben, das hinsichtlich der Reinigung und der mikrobiologischen Verhältnisse noch günstiger ist, und einen hohen Freiheitsgrad hinsichtlich der Wandelbarkeit der Sterne-Konfiguration ermöglicht.

Die gestellte Aufgabe wird mit den Merkmalen des Anspruchs 1 gelöst.

In Abkehr von dem bekannten Prinzip des großflächigen Plattenkörpers und der kreisbogenartigen Kanalträger-Tragstruktur wird ein aus Abschnitten zusammengesetzter Rohr- oder Profilrahmen mit auf dem Boden stehenden Standfüßen als Tragstruktur eingesetzt. Die Abschnitte dienen nicht nur zum Gestalten des Rahmens, sondern positionieren und tragen an Knoten Träggehäuse für Sterne, oder dgl.. Das Vortischsystem ist hinsichtlich der Reinigung günstig, beispielsweise weil an den Abschnitten nur kleine und abwärts geneigte Flächen vorgesehen sind, an denen Flüssigkeiten sofort ablaufen, und weil auch um die Traggehäuse große Freiräume geschaffen sind. Die Traggehäuse und die Abschnitte sind wahlweise kombinierbar und ermöglichen es, das Vortischsystem und die jeweilige Sterne-Konfiguration in modularer Bauweise an Einsatzfälle anzupassen oder abzuwandeln, z. B. durch Hinzunahme oder Wegnahme von Sternen und/oder Behälter-Behandlungs-Baueinheiten. Hierfür sind jeweils lösbare Verbindungen nur zwischen den Abschnitten oder zwischen den Abschnitten und der Traggehäuse zweckmäßig. Die Abschnitte des Rohr- oder Profilrahmens und die Traggehäuse bilden sozusagen einen Baukasten, aus dem unterschiedliche Sterne-Konfigurationen erstellbar sind. Da die Freiräume von der Fixierebene bis zum Boden frei sind, ist in diesem Bereich problemlos ein offenes Antriebssystem für zumindest die Sterne integrierbar. Einzelne Komponenten, z.B. Sterne, sind auch jederzeit auswechselbar, ohne den Gesamtverbund auflösen zu müssen.

Die Baukastenbauweise der Tragstruktur ermöglicht es, zumindest eine weitere Behälter-Behandlungs-Baugruppe für einen Verschließer, einen Inspektor, oder dgl. in der Fixierebene in die Sterne-Konfiguration einzugliedern, da der Rohr- oder Profilrahmen mit seinen auf dem Boden stehenden Stand-Füßen ein sehr stabiles und dennoch graziles Rahmengestell bildet.

Eine weitere Variationsmöglichkeit ist dadurch geboten, dass zusätzlich auf Abschnitten des Rohr- oder Profilrahmens und/oder bei Knoten wenigstens eine weiter Behälter-Behandlungs-Baueinheit festlegbar ist, wie ein Förderer, ein Abschwaller, oder dgl.. In der Fixierebene bietet der Profil- oder Rohrrahmen nämlich hierfür genügend Möglichkeiten, ohne das Grundprinzip der offenen Bauweise, wie es für die Reinigung und wegen der mikrobiologischen Verhältnisse wichtig ist, aufgeben zu müssen.

Bei einer Ausführungsform ist es zweckmäßig, wenn die Sterne und gegebenenfalls integrierte Behälter-Behandlungs-Baueinheiten innen in dem Rahmen positioniert und außen im Abstand von eine Art aussteifendes und abschirmendes Geländer bildenden Abschnitten umgeben sind.

Dabei kann es zweckmäßig sein; in einer Draufsicht und in Blickrichtung zum Boden die Stärke der Abschnitte kleiner auszubilden als die Durchmesser der Traggehäuse und der Standfüße, um bei ausreichender Stabilität der Tragstruktur große Freiraum-Felder zu schaffen und möglichst kleine Flächen vorzusehen, von denen Flüssigkeiten rasch ablaufen.

Im Hinblick auf optimale Reinigungsergebnisse und einwandfreie hygienische bzw. mikrobiologische Verhältnisse ist es zweckmäßig, zumindest die Abschnitte des Rohrrahmens aus Edelstahl oder gegebenenfalls als Vollprofile mit Edelstahloberflächen auszubilden.

Bei einer alternativen Ausführungsform sind die Abschnitte des Profilrahmens unterseitig offene Profile, deren vom Boden wegweisende Oberflächen gekrümmt oder eben und schräg zum Boden geneigt sind, damit Flüssigkeiten rasch ablaufen und nicht stehen bleiben können. Die nach unten offene Bauweise der Profilabschnitte bietet den Vorteil, Versorgungs- oder Steuerstränge, Schläuche, Kabel und dgl. geschützt installieren zu können und dort jederzeit Zugriff zu haben. Ferner hat die nach unten offene Bauweise den Vorteil einer einfacheren Montage mit Verbindungselementen, die gut zugänglich und dennoch den Einfluss von Flüssigkeiten und Verunreinigungen entzogen sind.

Zweckmäßig hat jeder Abschnitt zumindest ein Fügeende, das entweder zu einer Anschlussschnittstelle eines Traggehäuses oder eines Standfußes passt. Dadurch wird die Montage vereinfacht und lassen sich glatte Fügestellen bilden.

Zumindest einzelne Abschnitte, die nicht an Traggehäuse oder andere Behälter-Behandlungs-Baueinheiten angeschlossen werden, sollten wenigstens ein Stumpfstoß- oder Gehrungsstoß-Fügeende aufweisen. Mit diesen Abschnitten lassen sich von einem geraden Verlauf abweichende Rahmenbereiche herstellen, die beispielsweise dort zweckmäßig sind, wo periphere Baugruppen bei dem Vortischsystem zu platzieren sind.

Grundsätzlich ist es zweckmäßig, wenn die Fügestellen im Rohr- oder Profilrahmen außen glatt ausgebildet sind und innenliegende Verbindungselemente enthalten. Dies bietet Vorteile im Hinblick auf die hygienischen bzw. mikrobiologischen Verhältnisse.

Bei einer bevorzugten Ausführungsform enthalten zumindest einige Sterne in ihren Traggehäusen geborgene Individualantriebe, z.B. elektrische Servomotoren mit Getriebe oder elektrische Direktantriebsmotoren. Zu diesen Individualantrieben führende Steuer- oder Versorgungsstränge können in Abschnitten des Rohr- oder Profilrahmens installiert sein.

Bei einer alternativen Ausführungsform sind unterhalb der Fixierebene an den Unterseiten der Traggehäuse Antriebsräder, wie Kettenräder, Zahnräder oder Riemenzahnräder freiliegend angeordnet, die über freiliegende Antriebsverbindungen (kämmende Zahnräder, Ketten, Zahnriemen oder Gelenkwellen) mit einem Zentralantrieb verbunden sind. Dieses offene Antriebssystem lässt sich hygienisch unbedenklich gestalten und problemlos reinigen.

Bei einer alternativen Ausführungsform sind in den Traggehäusen geborgen angeordnete Antriebe über in Abschnitten verlegte Antriebsstränge, wie z.B. Gelenkwellen oder Riemen, antreibbar.

Bei einer zweckmäßigen Ausführungsform hat jedes Traggehäuse einen schlanken, vorzugsweise sich nach oben verjüngenden Oberteil und einen verbreiterten Fußteil. Der Fußsteil steht übergangslos auf einem den Knoten des Profil- oder Rohrrahmens bildenden, zweckmäßig runden Gehäuse, an dem mindestens zwei um die Gehäuseachse versetzte Anschlussschnittstellen vorgesehen sind. Diese Schnittstellen sind beispielsweise Verbindungsflansche oder Schnellkupplungen.

Falls dies zweckmäßig sein sollte, können im oder auf dem Rohr- oder Profilrahmen, oder gegebenenfalls unterhalb der Fixierebene, zumindest bereichsweise, Abdeckungen vorgesehen sein. Dies können gitterartige Strukturen, Blechteile oder Felder aus Kunststoff oder Glas sein.

Anhand der Zeichnung werden Ausführungsformen des Erfindungsgegenstandes erläutert.

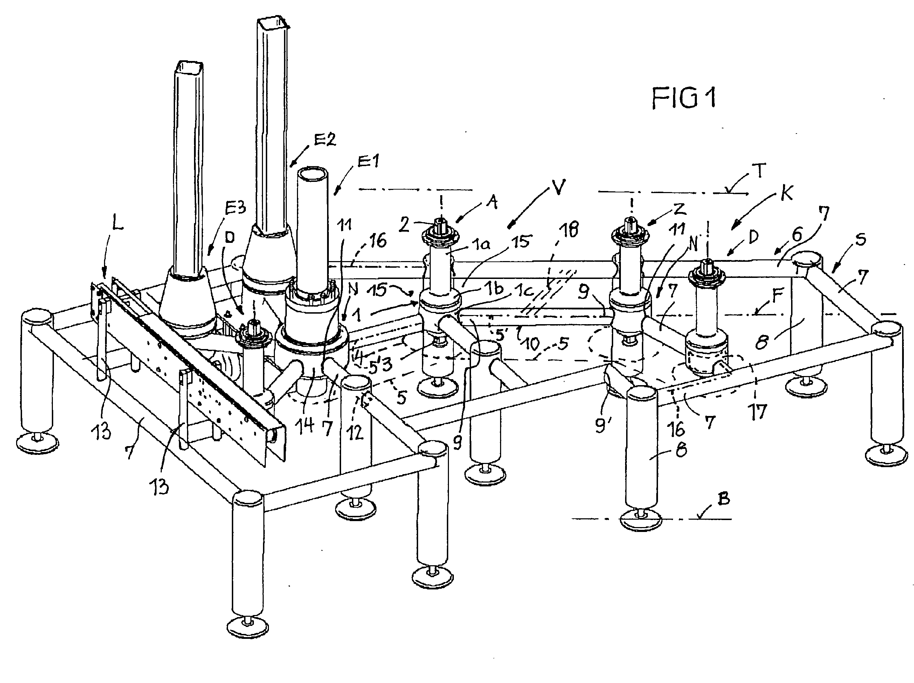

In der Zeichnung enthält Fig. 1 eine schematische Perspektivansicht einer Vortischstruktur, in der nebeneinander mehrere Detailvarianten angedeutet sind.

Ein in Fig. 1 schematisch angedeutetes Vortischsystem V wird operativ einer nicht-gezeigten Behälter-Behandlungsmaschine, wie einem Flaschenfüller, derart zugeordnet, dass in einer Transportebene T verlaufende Transportwege des Vortischsystems V an die Transportwege in der Behälter-Behandlungsmaschine angeschlossen sind. Über das Vortischsystem V erfolgt primär der Transport der Behälter in die und aus der Behälter-Behandlungsmaschine, wobei in das Vortischsystem jedoch gegebenenfalls an der Zuführ- oder an der Abführseite weitere Behälter-Behandlungs-Baugruppen eingegliedert werden können. In der in Fig. 1 gezeigten Ausführungsform ist ein Zuführ- und Abführ-Vortischsystem V ergänzt durch beispielsweise Verschließer E1, E2, E3 und einen weiteren Förderer L sowie mindestens einen Transfer-Stern D.

Eine Tragstruktur S des Vortischsystems V wird durch einen Rohr- oder Profilrahmen 6 gebildet, der aus einzelnen Abschnitten 7 und auf dem Boden (Bodenebene B) stehenden Standfüßen 8 erstellt ist und die einzelnen Behälter-Behandlungs-Baueinheiten relativ zueinander positioniert und trägt. Die Abschnitte 7 bilden in dem Rohr- oder Profilrahmen eine Fixierebene F, die im Abstand unterhalb der Transportebene T und oberhalb der Bodenebene B liegt und im Wesentlichen waagrecht ist. Von den die Behälter behandelnden Baueinheiten sind der Einfachheit halber nur Grundkomponenten angedeutet, um die Bauweise des Vortischsystems deutlicher zu zeigen. Es fehlen in der Figur die Behälter transportierende Elemente, Führungsbahnen, Überwachungselemente und dgl..

Ein Zuführ-Stern Z, der beispielsweise Behälter in die Behälter-Behandlungsmaschine transportiert, ist in Transportrichtung stromab eines Transfer-Sterns D und benachbart zu einem Abführ-Stern A im Rohr- oder Profilrahmen 6 festgelegt. In Transportrichtung des AbführSterns A schließt sich im Rohr- oder Profilrahmen 6 ein erster Verschließer E1 an, neben dem ein zweiter Verschließer E2 platziert ist, sowie ein weiterer Verschließer E3 und ein weiterer Transfer-Stern D, an dem sich ein Geradeförderer L anschließt.

Jeder Stern, beispielsweise der Abführ-Stern A, ist mit einer oberen freiliegenden Antriebswelle 2 an einem aufrechtstehenden Traggehäuse 1 angeordnet, das aus einem schlanken, sich gegebenenfalls torpedoartig nach oben verjüngenden Oberteil la, einem breiteren Fußteil 1b und einem Untergehäuse 1c zusammengesetzt sein kann. An der unteren Seite des Untergehäuses 1c kann gegebenenfalls eine Antriebswelle 3 in Richtung zum Boden vorstehen, die ein Antriebsrad 4 (Zahnrad, Kettenrad, Zahnriemenrad oder dgl.) tragen kann. Die Antriebsräder 4 sind über Antriebsverbindungen miteinander und mit einem Zentralantrieb (nicht gezeigt) bewegungsübertragend gekoppelt. Die Antriebsverbindungen können Zahnräder, Ketten, Zahnriemen, Gelenkwellen, oder dgl. sein.

Alternativ (beim in Fig. 1 äußerst rechten Transfer-Stern D angedeutet) könnten die Sterne A, Z, D in ihren Traggehäusen Individualantriebe 17 enthalten (elektrische Servomotoren mit Getrieben oder elektrische Direktantriebsmotoren), die, zweckmäßig, über in Abschnitten 7 installierte Steuer- und Versorgungsstränge 16 betrieben werden.

Als weitere Alternative wäre es denkbar, in den Traggehäusen innenliegende Antriebsteile über in einzelnen Abschnitten 7 installierte Antriebsstränge 5' anzutreiben, z.B. über Gelenkwellen und Umlenkgetriebe (Kegel- bzw. Schneckenradgetriebe) oder dgl..

Die Abschnitte 7 des Rohr- oder Profilrahmens sind entweder Edelstahlrohre zweckmäßig gleicher Durchmesser und/oder abschnittsweise sogar Vollprofile mit einer Edelstahloberfläche. Die Standfüße 18 sind Edelstahlsäulen, deren obere Enden flüssigkeitsdicht verschlossen sind, und die unten höheneinstellbare Fußteile aufweisen. Alternativ könnten die Abschnitte 7 auch unterseitig offene Profile aus Edelstahl sein (U-Profile oder dgl.), die jedoch so angeordnet sind, dass sie keine ebenen horizontalen Oberflächen, sondern gekrümmte oder ebene und schräg zum Boden weisende Oberflächen formen, an denen Flüssigkeiten rasch ablaufen.

Im Inneren des Rohr- oder Profilrahmens 6 angeordnete Abschnitte 7 bilden an den Positionen zumindest der Traggehäuse 1 Knoten N und sind mit Fügeenden 9 an Anschlussschnittstellen 11 der Traggehäuse 1 lösbar festgelegt. Die Fügestellen sind zweckmäßig glatt und enthalten z.B. innenliegende Verbindungselemente 12. Die Anschlussschnittstellen 11 sind beispielsweise Schraubflansche mit innenliegenden Schraubzugankern.

Entlang des Außenumrisses des Rohr- oder Profilrahmens 6 verlaufende Abschnitte 7 können hingegen Stumpfstoß- oder Gehrungsstoßfügeenden 9' aufweisen. An zumindest einigen Abschnitten 7 können freilegbare Befestigungspunkte für Stützen 13, wie beispielsweise zum Montieren des Förderers L, vorgesehen sein.

Jeder in das Vortischsystem V integrierte Verschließer E1, E2, E3 weist ein im Durchmesser gegenüber den Traggehäusen 1 größeres Traggehäuse 14 auf, das mittels angeschlossener Abschnitte 7 an einem Knoten N im Rohr-Profilrahmen 6 festgelegt ist.

Die Abschnitte 7 sind in dem Rohr- oder Profilrahmen so installiert, dass um die Traggehäuse 1, 14 große Freiraum-Felder 15 gebildet werden, die bis zum Boden durchgängig sind. Versorgungs- und/oder Steuerstränge 16 oder auch Leitungen für Reinigungsflüssigkeit zum Abschwallen können in Abschnitten 7 auch zu den Verschließern E1, E2, E3 und dem Förderer L installiert sein. Falls erforderlich, können im Rohr- oder Profilrahmen, oder darüber bzw. darunter, zumindest bereichsweise Abdeckungen 18 montiert sein, wie Gitter, Blechteile oder Kunststoff- oder Glasteile.

Da die Abschnitte, die Standfüße 8, die Traggehäuse 1, 14 baukastenartig zueinander passen, lassen sich von der gezeigten Sterne-Konfiguration K abweichende Sterne-Konfigurationen bilden, oder lässt sich die in Fig. 1 gezeigte Sterne-Konfiguration beliebig abwandeln durch Hinzunahme oder Wegnahme einzelner Behälter-Behandlungs-Baugruppen. Zwecks Reparatur oder Ersatz lassen sich einzelne Baueinheiten ausbauen oder ersetzen, ohne den Verbund auflösen zu müssen. Diese modulare Baukasten-Konstruktion ermöglicht eine hohe Variabilität in Bezug auf unterschiedlichste Konfigurationen, die vorteilhafterweise auch ein nachträgliches Verändern einer bereits bestehenden Anlage mit wenig Aufwand problemlos ermöglicht.

## Patentansprüche

1. Vortisch-System (V) für Behälter- Behandlungsmaschinen, insbesondere für Flaschenfüller, mit zumindest Zu- und Abführ-Sternen (A, Z, D), deren jeder auf einem Traggehäuse (1) angeordnet und vom Inneren des Traggehäuses her antreibbar ist, wobei durch die relativen Positionierungen der Sterne eine Sterne-Konfiguration (K) definiert ist, innerhalb derer Traggehäuse (1) oberhalb einer Bodenebene (B) und unterhalb einer Transportebene (T) in einer auf dem Boden stehenden Tragstruktur (S) fixiert sind, **dadurch gekennzeichnet, dass** die Tragstruktur (S) ein waagrechter, mit eigenen Boden-Standfüßen (8) auf dem Boden stehender Rohr- und/oder Profilrahmen (6) mit in Knoten (N) miteinander entweder direkt oder, wenn sich an einem knoten (N) ein Traggehäuse (1) befindet, über diese Traggehäuse (1) für Zuführ- und Abführsterne (A, Z, D) verbundenen Abschnitten (7) ist, dass die Traggehäuse (1) innerhalb des Rohr- und/oder Profilrahmens (6) freistehen, so angeordnet sind, dass um die Traggehäuse (1) freie Felder (15) gebildet sind, und dass zur wahlweisen Abwandlung der Sterne-Konfiguration (K) zumindest einige Abschnitte (7) untereinander und mit Traggehäusen (1) kombinierbar sind.

2. Vortischsystem nach Anspruch 1, **dadurch gekennzeichnet, dass** die Abschnitte (7) jeweils lösbar entweder direkt oder über Traggehäuse (1) verbunden sind.

3. Vortischsystem nach Anspruch 1, **dadurch gekennzeichnet, dass** zusätzlich zu den Sternen (A, Z, D) zumindest eine weitere Behälter-Behandlungs-Baugruppe (E1, E2, E3) wie ein Verschließer, Inspektor, Etikettiermaschine oder dergleichen, an einem Knoten (N) des Rohr- oder Profilrahmens (6) fixiert ist.

4. Vortischsystem nach Anspruch 1, **dadurch gekennzeichnet, dass** zusätzlich zu den Sternen (A, Z, D) zumindest eine weiter Behälter-Behandlungs-Baugruppe (L) wie ein Förderer, ein Abschwaller oder dergleichen auf Abschnitten (7) und/oder bei Knoten (N) des Rohr- und Profilrahmens (6) fixiert ist.

5. Vortischsystem nach wenigstens einem der vorhergehenden Ansprüche, **dadurch gekennzeichnet, dass** die Sterne (A, Z, D) und gegebenenfalls jede weiter Behälter-Behandlungs-Baugruppe (E1, E2, E3, L) innerhalb des von außenliegenden Abschnitten (7) des Rohr- und Profilrahmens definierten Außenumrisses angeordnet sind.

6. Vortischsystem nach Anspruch 1, **dadurch gekennzeichnet, dass** - in einer Draufsicht mit Blickrichtung auf den Boden - die Stärke der Abschnitte (7) kleiner ist als die Durchmesser der Traggehäuse (1) und der Standfüße (8).

7. Vortischsystem nach Anspruch 1, **dadurch gekennzeichnet, dass** die Abschnitte (7) des Rohr-Rahmens (6) gerade Edelstahlrohre oder runde Vollprofile, vorzugsweise mit untereinander gleichen Außendurchmessern, sind.

8. Vortischsystem nach Anspruch 1, **dadurch gekennzeichnet, dass** die Abschnitte (7) des Profilrahmens (6) unterseitig offene Profile sind, deren vom Boden wegweisende Oberflächen gekrümmt oder eben und schräg zum Boden geneigt sind.

9. Vortischsystem nach Anspruch 1, **dadurch gekennzeichnet, dass** jeder Abschnitt (7) zumindest ein Fügeende (9) aufweist, das entweder zu einer Anschlussschnittstelle (11) eines Traggehäuses (1) oder eines Standfußes (8) passt.

10. Vortischsystem nach Anspruch 1, **dadurch gekennzeichnet, dass** einzelne Abschnitte (7) im Rohr- oder Profilrahmen (6) Stumpfstoß- oder Gehrungsstoß- Fügeenden (9') aufweisen.

11. Vortischsystem nach Anspruch 1, **dadurch gekennzeichnet, dass** die Fügestellen im Rohr- und Profilrahmen (6) außen glatt ausgebildet sind und innenliegende Verbindungselemente (12) enthalten.

12. Vortischsystem nach Anspruch 1, **dadurch gekennzeichnet, dass** zumindest einige Sterne (A, Z, D) in ihren Traggehäusen (1) geborgene Individualantriebe (17) aufweisen, vorzugsweise elektrische Servomotoren mit Getrieben oder elektrische Direktantriebsmotoren, und dass Steuer- und Versorgungsstränge (16) zu den Individualantrieben, vorzugsweise, in Abschnitten (7) des Rohr- und Profilrahmens (6) angeordnet sind.

13. Vortischsystem nach Anspruch 1, **dadurch gekennzeichnet, dass** unterhalb der Fixierebene (F) des Rohr- oder Profilrahmens (6) an den Unterseiten der Traggehäuse (1) Antriebsräder (4) wie Kettenräder, Zahnräder oder Riemenzahnräder freiliegend angeordnet und über freiliegende Antriebsverbindungen (5) mit einem Zentralantrieb verbunden sind.

14. Vortischsystem nach Anspruch 1, **dadurch gekennzeichnet, dass** in den Traggehäusen (1) geborgen angeordnete Antriebe (17) über in Abschnitten (7) verlegte Antriebsstränge (5') antreibbar sind.

15. Vortischsystem nach Anspruch 1, **dadurch gekennzeichnet, dass** jedes Traggehäuse (1) einen schlanken, vorzugsweise sich nach oben verjüngenden, Oberteil (1 a), und einen verbreiterten Fußteil (1 b) aufweist und mit dem Fußteil (1 b) auf einem den Knoten (N) des Rohr- oder Profilrahmens (6) bildenden Untergehäuse (1 c) montiert ist, an dem mindestens zwei um die Achse versetzte Abschnitts-Anschlussschnittstellen (11) vorgesehen sind.

16. Vortischsystem nach Anspruch 1, **dadurch gekennzeichnet, dass** in oder auf dem Rohr- oder Profilrahmen (6) zumindest bereichsweise Abdeckungen (18) vorgesehen sind, vorzugsweise Gitter, Blechteile oder Kunststoff bzw. Glasteile.

## Claims

1. Preparatory table system (V) for container handling machines, in particular for bottle fillers, having at least supply and removal stars (A, Z, D), of which each is disposed on a support housing (1) and can be driven from inside the support housing, wherein by virtue of the relative positions of the stars a star configuration (K) is defined, within which support housings (1) are fixed above a floor plane (B) and below a transport plane (T) in a support structure (S) standing on the floor, **characterised in that** the support structure (S) is a horizontal tubular and/or profile frame (6) which stands with its own floor standing legs (8) on the floor and has sections (7) which are connected to each other in nodes (N) either directly or, if a support housing (1) is located on a node (N), via these support housings (1) for supply and removal stars (A, Z, D), **in that** the support housings (1) stand freely inside the tubular and/or profile frame (6), are disposed in such a manner that free areas (15) are formed around the support housings (1), and **in that** in order to modify the star configuration (K) as required at least some sections (7) can be combined together and with support housings (1).

2. Preparatory table system as claimed in claim 1, **characterised in that** the sections (7) are each releasably connected either directly or via support housings (1).

3. Preparatory table system as claimed in claim 1, **characterised in that** in addition to the stars (A, Z, D) at least one further container handling assembly (E1, E2, E3) such as a lockable, inspector, labelling machine or the like is fixed to a node (N) of the tubular or profile frame (6).

4. Preparatory table system as claimed in claim 1, **characterised in that** in addition to the stars (A, Z, D) at least one further container handling assembly (L) such as a conveyor, a washing device or the like is fixed on sections (7) and/or in nodes (N) of the tubular and profile frame (6).

5. Preparatory table system as claimed in at least one of the preceding claims, **characterised in that** the stars (A, Z, D) and optionally each further container handling assembly (E1, E2, E3, L) are disposed inside the outer contour which is defined by outer sections (7) of the tubular and profile frame.

6. Preparatory table system as claimed in claim 1, **characterised in that** - in a plan view with the viewing direction towards the floor - the thickness of the sections (7) is less than the diameters of the support housings (1) and the standing legs (8).

7. Preparatory table system as claimed in claim 1, **characterised in that** the sections (7) of the tubular frame (6) are linear stainless steel tubes or round solid profiles, preferably with mutually identical outer diameters.

8. Preparatory table system as claimed in claim 1, **characterised in that** the sections (7) of the profile frame (6) are profiles which are open on the underside and whose surfaces pointing away from the floor are curved or planar and obliquely inclined with respect to the floor.

9. Preparatory table system as claimed in claim 1, **characterised in that** each section (7) comprises at least one joining end (9) which fits either to a connection interface (11) of a support housing (1) or a standing leg (8).

10. Preparatory table system as claimed in claim 1, **characterised in that** individual sections (7) in the tubular or profile frame (6) comprise butt- or mitre-joint joining ends (9').

11. Preparatory table system as claimed in claim 1, **characterised in that** the joining points in the tubular and profile frame (6) are formed in a smooth manner on the outside and contain inner connection elements (12).

12. Preparatory table system as claimed in claim 1, **characterised in that** at least some stars (A, Z, D) comprise individual drives (17) held in their support housings (1), preferably electric servomotors with transmissions or electric direct drive motors, and **in that** control and supply lines (16) leading to the individual drives are disposed preferably in sections (7) of the tubular and profile frame (6).

13. Preparatory table system as claimed in claim 1, **characterised in that** below the fixing plane (F) of the tubular or profile frame (6) on the undersides of the support housings (1) drive wheels (4) such as sprocket wheels, gearwheels or belt toothed wheels are disposed in a free manner and are connected to a central drive via free drive connections (5).

14. Preparatory table system as claimed in claim 1, **characterised in that** drives (17) which are disposed in secure manner in the support housings (1) can be driven via drive trains (5') which are placed in sections (7).

15. Preparatory table system as claimed in claim 1, **characterised in that** each support housing (1) comprises a slender, preferably upwardly tapering top part (1a) and a widened bottom part (1b) and is mounted with the bottom part (1b) on a lower housing (1c) which forms the node (N) of the tubular or profile frame (6) and which is provided with at least two section-connection interfaces (11) which are offset about the axis.

16. Preparatory table system as claimed in claim 1, **characterised in that** covers (18), preferably grids, sheet metal parts or synthetic material or glass parts, are provided at least in regions in or on the tubular or profile frame (6).

## Revendications

1. Système de table préliminaire (V) pour des machines de traitement de récipients, en particulier pour des dispositifs de remplissage de bouteilles, comprenant au moins des étoiles d'acheminement et d'évacuation (A, Z, D) dont chacune est disposée sur un bâti de support (1) et peut être entraînée depuis l'intérieur du bâti de support, dans lequel, via les positionnements relatifs des étoiles, est définie une configuration en étoile (K) au sein de laquelle sont fixés des bâtis de support (1) au-dessus d'un plan de base (B) et au-dessous d'un plan de transport (T) dans une structure de support (S) montée sur le sol, **caractérisé en ce que** la structure de support (S) est un cadre tubulaire et/ou profilé (6) dressé sur le sol avec ses propres pieds de support (8), comprenant des sections (7) reliées les unes aux autres, soit directement, soit, lorsqu'un bâti de support (1) se trouve à un noeud (N), via ces bâtis de support (1) pour des étoiles d'acheminement et d'évacuation (A, Z, D), **en ce que** les bâtis de support (1) sont libres au sein du cadre tubulaire et/ou profilé (6) en étant disposés de telle sorte que des champs libres (15) sont formés autour des bâtis de support (1), et **en ce que**, pour la transformation sélective de la configuration en étoile (K), au moins un certain nombre de sections (7) peuvent être combinées entre elles et avec des bâtis de support (1).

2. Système de table préliminaire selon la revendication 1, **caractérisé en ce que** les sections (7) sont reliées respectivement de manière amovible, soit directement, soit via des bâtis de support (1).

3. Système de table préliminaire selon la revendication 1, **caractérisé en ce que** en plus des étoiles (A, Z, D), au moins un module supplémentaire de traitement de récipients (E1, E2, E3) tel qu'un dispositif de fermeture, un dispositif d'inspection, une machine d'étiquetage ou analogue, est fixé à un noeud (N) du cadre tubulaire ou profilé (6).

4. Système de table préliminaire selon la revendication 1, **caractérisé en ce que,** en plus des étoiles (A, Z, D), au moins un module supplémentaire de traitement de récipients (L) tel qu'un transporteur, un dispositif de rinçage par jet d'eau ou analogues est fixé sur des sections (7) et/ou à des noeuds (N) du cadre tubulaire et profilé (6).

5. Système de table préliminaire selon au moins une des revendications précédentes, **caractérisé en ce que** les étoiles (A, Z, D) et le cas échéant chaque module supplémentaire de traitement de récipients (E1, E2, E3, L) sont disposées à l'intérieur de la périphérie externe définie par des sections externes (7) du cadre tubulaire et profilé.

6. Système de table préliminaire selon la revendication 1, **caractérisé en ce que** - dans une vue en plan en regardant vers le sol - l'épaisseur des sections (7) est inférieure au diamètre des bâtis de support (1) et des pieds de support (8).

7. Système de table préliminaire selon la revendication 1, **caractérisé en ce que** les sections (7) du cadre tubulaire (6) sont des tubes droits en acier spécial ou des profilés pleins de forme ronde, de -préférence avec des diamètres externes égaux les uns aux autres.

8. Système de table préliminaire selon la revendication 1, **caractérisé en ce que** les sections (7) du cadre profilé (6) sont des profilés ouverts en bas dont les surfaces se détournant du sol sont courbes ou planes et inclinées par rapport au sol.

9. Système de table préliminaire selon la revendication 1, **caractérisé en ce que** chaque section (7) présente au moins une extrémité de jonction (9) qui est adaptée à un endroit de raccordement (11), soit d'un bâti de support (1), soit d'un pied de support (9).

10. Système de table préliminaire selon la revendication 1, **caractérisé en ce que** des sections individuelles (7) dans le cadre tubulaire ou profilé (6) présentent des extrémités de jonction (9') pour un assemblage bout-à-bout ou pour un assemblage à onglet.

11. Système de table préliminaire selon la revendication 1, **caractérisé en ce que** les endroits de jonction dans le cadre tubulaire et profilé (6) sont réalisés pour être lisses à l'extérieur et contiennent des éléments de liaison internes (12).

12. Système de table préliminaire selon la revendication 1, **caractérisé en ce que,** au moins un certain nombre des étoiles (A, Z, D) présentent des entraînements individuels (17) disposés dans leurs bâtis de support (1) en étant cachés à la vue, de préférence des servomoteurs électriques à transmission ou bien des moteurs électriques d'entraînement direct, et **en ce que** des barres de commande et d'alimentation (16) pour les entraînements individuels sont disposées de préférence dans des sections (7) du cadre tubulaire et profilé (6).

13. Système de table préliminaire selon la revendication 1, **caractérisé en ce que,** en dessous du plan de fixation (F) du cadre tubulaire ou profilé (6), sont disposées en roue libre, sur les côtés inférieurs des bâtis de support (1), des roues d'entraînement (4) telles que des roues à chaînes, des roues dentées ou des roues dentées à courroies et sont reliées via des liaisons d'entraînement (5) en roue libre à un entraînement central.

14. Système de table préliminaire selon la revendication 1, **caractérisé en ce que** des entraînements (17) disposés dans les bâtis de support (1) en étant cachés à la vue peuvent être entraînés par des barres d'entraînement (5') posées dans des sections (7).

15. Système de table préliminaire selon la revendication 1, **caractérisé en ce que** chaque bâti de support (1) présente une partie supérieure étroite (la), qui se raccourcit de préférence vers le haut, et une partie de base élargie (1b), et est monté avec la partie de base (1b) sur un bâti inférieur (1c) formant les noeuds (N) du cadre tubulaire ou profilé (6), bâti sur lequel sont prévus au moins deux endroits de raccordement de sections (11) décentrés.

16. Système de table préliminaire selon la revendication 1, **caractérisé en ce que** dans ou sur le cadre tubulaire ou profilé (6), sont prévus des recouvrements (18), au moins par zones, de préférence des grilles, des tôles ou bien des éléments en matière synthétique respectivement en verre.
